# FASCICULE DE BREVET EUROPEEN

(11) **EP 2 257 207 B1**
(45) Date de publication et mention de la délivrance du brevet: **13.03.2013**
(21) Numéro de dépôt: 09729108.2
(22) Date de dépôt: 13.03.2009
(51) Int. Cl.: A47J 31/44, A47J 31/60, B67D 1/07

(54) **MACHINE POUR LA PREPARATION DE BOISSONS COMPRENANT UN RECIPIENT INTEGRE DE NETTOYAGE D'UNE BUSE VAPEUR**
GETRÄNKEHERSTELLUNGSMASCHINE MIT EINEM EINGEBAUTEN BEHÄLTER ZUR REINIGUNG MIT EINER DAMPFDÜSE
DRINK PREPARING MACHINE INCLUDING A BUILT-IN CONTAINER FOR CLEANING USING STEAM NOZZLE

(30) Priorité: 26.03.2008 FR 0851952
(43) Date de publication de la demande: 08.12.2010
(73) Titulaire: SEB S.A., 69130 Ecully (FR)
(72) Inventeur: MORIN, Gilles, F-14210 Sainte Honorine du Fay (FR); CROSVILLE, Vincent, 75017 Paris (FR); GAGNON, Laurent, F-14000 Caen (FR)
(74) Mandataire: Bourrières, Patrice
(86) Numéro de dépôt international: PCT/FR2009/000274
(87) Numéro de publication internationale: WO 2009/122038

(56) Documents cités:
- EP-A- 1 597 992
- WO-A-03/091152

## Description

La présente invention se rapporte à une machine pour la préparation de boissons, notamment mais non exclusivement à une machine à café de type espresso, qui comporte une buse de sortie de vapeur ou d'autres liquides tels que du lait. Ces buses, dites buses vapeur, sont amenées à être plongées dans la boisson. Elles nécessitent par la suite un nettoyage, au moins de leur surface extérieure entrée en contact avec la boisson. Plus particulièrement, l'invention se rapporte à une machine pour la préparation de boissons comprenant :
- un boîtier présentant une façade ;
- une zone de préparation de boissons délimitée sur un côté par la façade, dans sa partie supérieure par au moins une sortie de boisson, et dans sa partie inférieure par un plateau repose-tasses sur lequel est susceptible d'être placée une tasse recueillant la boisson ; et
- une buse vapeur mobile reliée au boîtier par un dispositif de déplacement et présentant une extrémité libre.

Le nettoyage d'une buse vapeur, par exemple après la préparation d'un cappuccino ou d'un latte, est fastidieux. Traditionnellement, l'utilisateur frotte la buse à l'aide d'un chiffon humide pour enlever les traces extérieures. Outre la nécessité de toujours disposer d'un chiffon, cela s'avère peu pratique, notamment pour les machines de type domestique dont la buse peut être difficile d'accès.

Une autre solution est de laisser tremper la buse vapeur dans une tasse remplie d'eau placée dans la zone de préparation ou à côté de celle-ci selon la mobilité de la buse. Mais là encore, de nombreux inconvénients apparaissent. S'il s'agit d'une tasse identique à celle recevant la boisson, il faut bien souvent la remplir quasiment à ras bord pour nettoyer toute la portion souillée de la buse. S'il s'agit d'un récipient différent, se pose le problème de son encombrement et de son rangement. D'autre part, après une période de trempage qui peut être de durée très variable, il faut que l'utilisateur ou l'utilisateur suivant, vide le récipient et le range.

Ces contraintes font que la buse vapeur est bien souvent laissée en l'état avec des traces, surtout s'il s'agit d'une machine de type domestique en libre service. Le nettoyage est d'autant plus difficile par la suite que des traces de lait ont séché sur la paroi extérieure de la buse. Il est alors quasiment indispensable de laisser tremper la buse dans un récipient contenant une solution nettoyante.

Par ailleurs, il est connu, notamment du document WO03091152A, des systèmes de nettoyage automatique d'une buse analogue à une buse vapeur. Ces systèmes placent la buse dans une chambre relativement fermée et délivrent par la buse une solution nettoyante sous pression. L'agitation vigoureuse du liquide autour de la buse nettoie celle-ci. Néanmoins de tels systèmes s'avèrent relativement complexes, encombrants et augmentent significativement le coût de la machine. En effet, l'enceinte définie par la chambre et la buse doit être relativement étanche compte tenu du liquide circulant sous pression. D'autre part le débit et la pression du liquide injecté nécessitent un dispositif d'alimentation en eau conséquent, et sensiblement plus coûteux que ceux prévus dans la plupart des machine espresso pour délivrer de l'eau chaude par la buse vapeur. Un inconvénient supplémentaire est la quantité de liquide relativement importante utilisée pour chaque nettoyage. Il faut alors prévoir soit un bac de récupération de grand volume, soit un raccordement sur une conduite d'évacuation d'eaux usées.

La présente invention a donc pour but de fournir une solution simple facilitant le nettoyage d'une buse vapeur, notamment dans le cadre d'une utilisation domestique, que ce soit par une simplification des opérations de nettoyage pour l'utilisateur, ou que ce soit par une construction simple permettant l'intégration dans un appareil domestique à un coût acceptable.

A cet effet, la présente invention a pour objet une machine du type précité, caractérisée en ce que le boîtier comprend en outre un logement définissant une zone de nettoyage, dans laquelle est agencé un récipient de rinçage présentant une ouverture supérieure et comportant un dispositif de vidange du liquide susceptible d'être contenu dans celui-ci, et dans laquelle la buse mobile déplacée depuis la zone de préparation, est entraînée selon un mouvement vertical par le dispositif de déplacement de sorte que l'extrémité libre de la buse pénètre dans le récipient par son ouverture supérieure.

Grâce à ces dispositions, un récipient de rinçage est toujours disponible, et ce dans un zone de nettoyage dédiée agencée de préférence pour ne pas gêner la préparation de boissons. L'emplacement prédéterminé du récipient de rinçage permet d'automatiser plus ou moins l'opération de nettoyage de la buse, et le récipient en lui-même peut avoir une forme particulièrement bien adaptée à sa fonction spécifique. Le fait de prévoir un dispositif de vidange évite de manipuler le récipient, même si celui-ci est avantageusement amovible.

Dans des modes de réalisations préférés on a recours, en outre, à l'une ou l'autre des dispositions suivantes :
- le logement définissant la zone de nettoyage est un logement en creux formé dans la façade du boîtier, de préférence en regard de la zone de préparation, le récipient de rinçage étant intégralement contenu dans ledit logement ; cet agencement du logement évite toute interférence du récipient avec les tasses lors de la manipulation de celles-ci et évite aux utilisateurs de se méprendre sur la fonction du récipient de rinçage ;
- la buse présente à partir de son extrémité libre une portion rectiligne allongée, et le récipient de rinçage présente une forme allongée verticalement définie par une paroi annulaire s'étendant depuis un fond jusqu'à l'ouverture supérieure, ladite paroi annulaire étant configurée pour entourer étroitement la portion rectiligne de la buse plongée dans le récipient ; ainsi le volume de la solution nettoyante nécessaire pour nettoyer une portion donnée de la buse est minimisé ;
- le récipient de rinçage est monté de manière amovible dans le logement du boîtier ;
- le logement en creux du boîtier présente une ouverture frontale s'étendant jusqu'au plateau repose-tasses, et le récipient de rinçage présente un organe de préhension faisant saillie de l'ouverture frontale du logement et venant de préférence en appui sur le plateau repose-tasses ;
- le récipient de rinçage comporte un dispositif de vidange apte à évacuer le liquide contenu dans ledit récipient vers un bac de récupération placé sous celui-ci et amovible par rapport au boîtier ; ainsi le liquide ayant servi au nettoyage de la buse peut être évacué par gravité, ce qui simplifie considérablement la machine ;
- le bac de récupération s'étend également sous le plateau repose-tasses qui est perforé, et est amovible par coulissement horizontal par rapport au boîtier ;
- le dispositif de vidange est une conduite formant un siphon qui présente une entrée située à l'intérieur du récipient et à proximité du fond de celui-ci, un coude situé à proximité de l'ouverture supérieure du récipient et à un niveau correspondant à un maximum de liquide contenu dans le récipient, et une sortie située sous le niveau de l'entrée et de préférence orientée vers le bas ;
- le récipient de rinçage comporte un trop-plein et le logement de la zone de nettoyage présente une ouverture inférieure communiquant avec un bac de récupération ;
- le récipient de rinçage présente une face frontale transparente qui est visible au niveau de la façade du boîtier.

D'autres caractéristiques et avantages apparaîtront au cours de la description qui va suivre, donnée à titre d'exemple non limitatif, en référence aux dessins dans desquels :
- la figure 1 est une vue en perspective d'une machine à café comportant une buse vapeur et un plateau repose-tasses, ainsi qu'un système de nettoyage de la buse selon l'invention ;
- la figure 2 est une vue en perspective arrachée du plateau, de la buse et du système de nettoyage de la figure 1 ;
- la figure 3 est une vue arrachée partielle de dessus de la figure 1 ;
- la figure 4 est une vue analogue à la figure 3 dans laquelle le système de nettoyage est en configuration de nettoyage ;
- la figure 5 est une vue de face de la figure 4 pour laquelle la buse vapeur est abaissée ;
- la figure 6 est une vue en coupe simplifiée du plateau repose-tasses et d'un récipient de rinçage du système de nettoyage ; et
- la figure 7 est une vue en perspective du récipient de la figure 6.

Sur les différentes figures, des références identiques désignent des éléments identiques ou similaires.

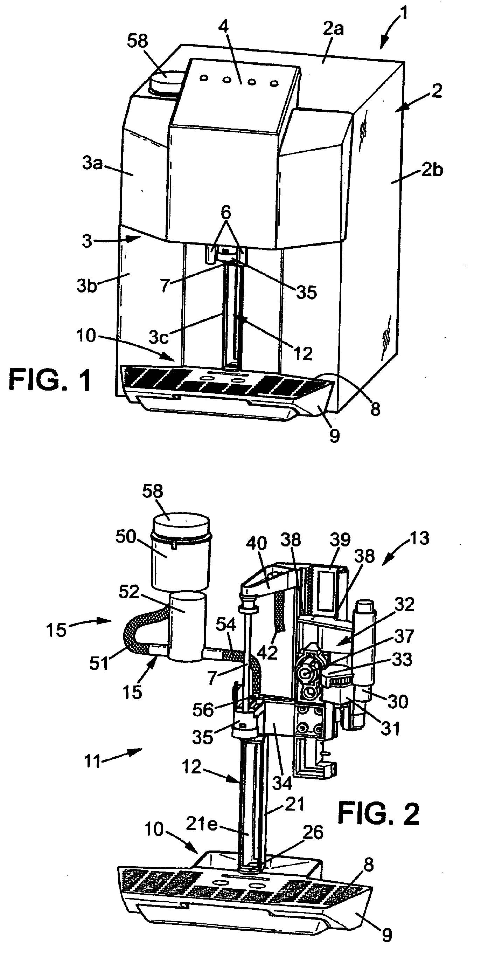

A la figure 1, est représentée une machine 1 pour la préparation de boissons, et plus particulièrement une machine à café espresso à usage domestique. Une telle machine peut être installée facilement par un simple branchement sur une prise électrique, mais sans raccordement à une conduite d'eau ou une conduite d'évacuation.

La machine 1 présente un boîtier 2 globalement parallélépipédique, avec notamment une face supérieure 2a, des faces latérales 2b et une façade 3. La façade 3 présente une partie supérieure 3a proéminente par rapport à une partie inférieure 3b. La partie supérieure 3a de la façade comporte un panneau de commande 4 muni de boutons reliés à une unité de commande électronique, non représentée, permettant de commander de manière la plus automatisée possible le fonctionnement de la machine.

Sous la partie proéminente 3a de la façade sont situées deux sorties de boisson 6, ici du café. Ces sorties 6 sont mobiles verticalement pour s'adapter à la hauteur de la tasse, mais cela n'est pas indispensable et une seule sortie pourrait être prévue.

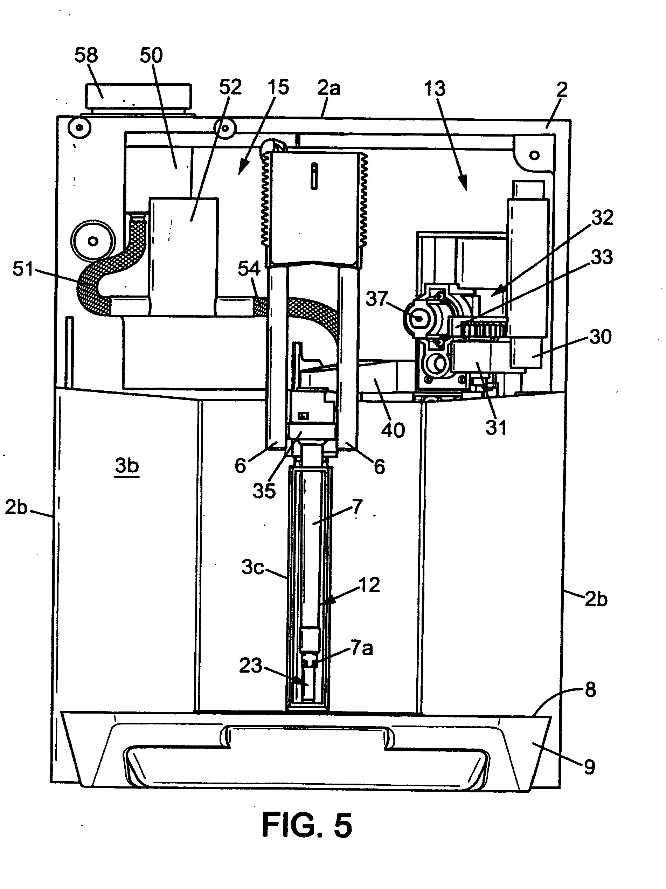

Sous la partie proéminente 3a de façade et en arrière des sorties 6, est également agencée une buse vapeur mobile 7, mieux visible aux figures 2 et 5.

De manière bien connue, le boîtier 2 comporte un groupe d'infusion permettant de délivrer, de préférence de manière automatique, du café par les sorties 6 à partir de réserves internes de mouture et d'eau.

De même, le boîtier 2 comporte un générateur de vapeur capable de délivrer de la vapeur à la buse 7, mais aussi de l'eau chaude sous faible pression. Ce dispositif d'alimentation en vapeur et en eau de la buse 7 peut être formé par tous moyens connus, et notamment une chaudière. L'alimentation en eau ou en vapeur est réalisée à l'aide d'électrovannes commandées par l'unité de commande électronique.

Dans la partie inférieure de la façade 3, est agencé un plateau repose-tasses 8 pour supporter une ou deux tasses destinées à recueillir la boisson délivrée par les sorties 6, et/ou préparée à l'aide de la buse vapeur 7. Il est néanmoins envisageable que ce plateau repose-tasses soit formé directement par le plan de travail sur lequel repose la machine.

Le plateau repose-tasses 8 est perforé et un bac de récupération 9 est disposé sous celui-ci pour récupérer les projections et débordements de liquide.

La machine 1 présente ainsi une zone de préparation de boissons 10 définie par l'espace s'étendant au-dessus du plateau repose-tasses 8 jusqu'aux sorties du café 6 et à la buse vapeur 7 en position haute, et plus généralement jusqu'au dessous de la partie supérieure proéminente 3a de la façade 3. Cette zone de préparation 10 est délimitée vers l'arrière par la partie inférieure 3b de la façade qui est faiblement incurvée. Toutefois, la zone de préparation pourrait se présenter sous forme d'une niche délimitée latéralement sur trois côtés par la façade.

La buse vapeur 7 est mobile verticalement dans la zone de préparation 10 grâce à un mécanisme qui sera détaillée ci-après. La mobilité verticale de la buse 7 est déterminée pour que l'extrémité libre 7a de celle-ci, mieux visible à la figure 5, puisse descendre dans une tasse placée sous les sorties 6. Il est alors possible de délivrer la vapeur par l'extrémité libre 7a de la buse pour réchauffer la boisson, et éventuellement émulsionner celle-ci en entraînant de l'air avec la vapeur. Il est envisageable de placer la buse dans une position supérieure pour délivrer un produit, par exemple de la mousse de lait sur un café, par exemple à l'aide d'un accessoire créant à l'aide de la vapeur une émission air/lait à l'extrémité de la buse.

Afin de nettoyer la buse vapeur 7 après qu'elle ait trempée dans une boisson comme un espresso, un latte macchiato, un cappuccino ou un chocolat chaud, la machine comprend un système de nettoyage 11 dont les principaux composants sont représentés à la figure 2. Il s'agit essentiellement d'un récipient de rinçage 12, d'un dispositif de déplacement 13 de la buse vapeur 7, et d'un dispositif de délivrance de produit de nettoyage 15.

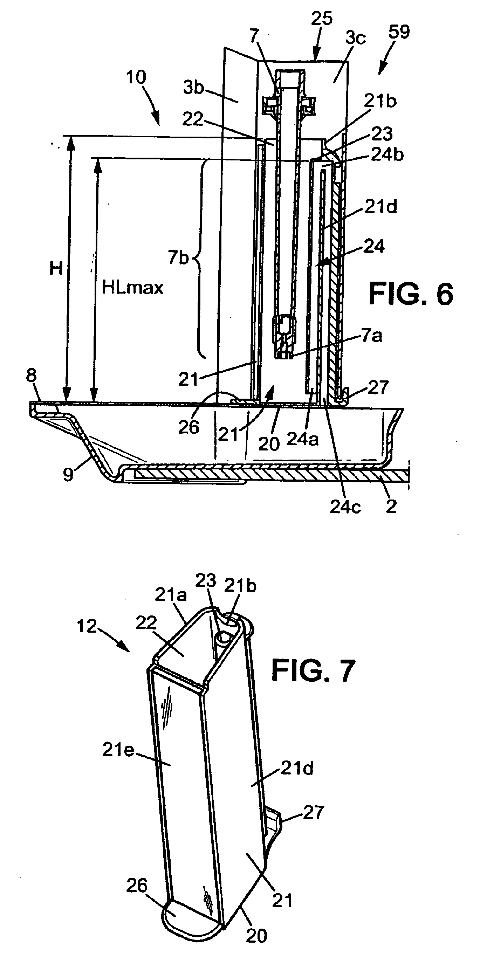

Comme cela est mieux visible aux figures 6 et 7, le récipient de rinçage 12 présente un fond 20 à partir duquel s'étend vers le haut la paroi annulaire 21 jusqu'à une ouverture supérieure 22 délimitée par le pourtour supérieur 21a de la paroi.

Le pourtour supérieur 21a de la paroi annulaire 21 présente une échancrure 21b qui constitue un trop-plein à partir duquel le liquide en excès s'écoule du côté de cette échancrure 21b.

Le récipient de rinçage 12 comporte également un dispositif de vidange 23 qui permet une évacuation quasi complète du liquide contenu dans le récipient. Le déclenchement de la vidange du récipient est effectué à la suite d'une commande, ou d'une série de commandes de l'unité de commande électronique.

La hauteur H, indiquée sur la figure 6, du récipient de rinçage 12 est relativement importante pour pouvoir recevoir la portion de la buse 7 qui a trempé dans une boisson. Du fait de la présence d'un trop-plein 21b et d'un dispositif de vidange 23, la hauteur H du récipient 12 est supérieure à celle de la plupart des tasses utilisées avec la machine.

La portion de la buse 7 susceptible d'être souillée est une portion 7b s'étendant de manière rectiligne à partir de l'extrémité libre 7a et présentant une section sensiblement constante, ici de forme circulaire. La paroi 21 du récipient 12 est avantageusement agencée pour entourer la portion rectiligne 7b de la buse de manière relativement étroite. Ceci permet de minimiser la quantité de liquide nécessaire pour le nettoyage ou le rinçage de la buse. Ici, le récipient 12 a une section transversale sensiblement trapézoïdale avec un sommet arrondi. Ce sommet correspond à la portion arrière 21d de la paroi annulaire 21. Les portions arrière 21d, frontale 21e et latérales de la paroi 21 du récipient 12, sont agencées pour être à proximité de la buse 7 en particulier à une distance inférieure à deux fois le diamètre extérieur maximum de la portion 7b de la buse 7, et comme représenté à une distance inférieure à une fois le diamètre extérieur de celle-ci.

Il est apparu particulièrement avantageux de réaliser le dispositif de vidange 23 à l'aide d'une conduite 24, mieux visible à la figure 6, qui forme un siphon. La conduite 24 présente une entrée 24a située à l'intérieur du récipient 12 et à proximité de son fond 20, une portion verticale rectiligne s'étendant jusqu'à un coude 24b, puis une autre portion verticale descendant jusqu'à un orifice de sortie 24c situé en dehors du récipient, et plus précisément sur la face inférieure du fond 20. On comprendra que la conduite 24 forme un siphon qui s'amorce lorsque le niveau du liquide dans le récipient atteint le niveau maximum HLmax défini par le sommet du coude 24b. Mais tant que le liquide reste à un niveau prédéterminé situé sous ce niveau maximum HLmax, le siphon ne s'amorce pas. En choisissant un niveau prédéterminé situé sous le niveau de la base du coude 24b, il n'y a aucune fuite de liquide par la sortie 24c de la conduite.

La conduite de vidange 24 est agencée sur la portion arrière 21d de la paroi du récipient 12. La portion frontale 21e de la paroi est plane et réalisée par une plaque transparente. Elle constitue ainsi une face frontale à travers laquelle on peut voir les déplacements de la buse 7 et constater la vidange du récipient 12.

Le récipient de rinçage 12 ainsi réalisé constitue donc un récipient spécifique, tant par sa forme globale qui est étroite et allongée verticalement, que par la présence d'un dispositif de vidange 23 et les autres particularités de réalisation.

Pour permettre le nettoyage de la buse 7 par introduction de celle-ci à travers l'ouverture supérieure 22, le récipient 12 est agencé dans une position bien précise par rapport au boîtier 2 de la machine.

Pour cela, la façade 3, et plus particulièrement la partie inférieure 3b de celle-ci comporte un logement en creux 3c, voir figures 1 et 5. Le logement creux 3c s'étend verticalement sur toute la hauteur de la partie inférieure 3b de la façade de sorte qu'il forme une ouverture frontale dans cette façade.

Le logement 3c présente une section transversale trapézoïdale dont la base plus large est située du côté de la façade 3. La section transversale du logement 3c est adaptée pour recevoir de manière ajustée le récipient de rinçage 12, et de sorte que celui-ci soit intégralement contenu dans ce logement. La face frontale transparente 21e vient ainsi affleurer avec le prolongement de la façade 3. Il n'y a pas d'inférence entre le récipient de rinçage 12 et les tasses qui peuvent être placées dans la zone de préparation de boissons 10. D'autre part, l'ouverture frontale du logement 3c est suffisamment étroite pour interdire toute introduction d'une tasse.

Comme cela apparaît à la figure 6, l'extrémité inférieure du logement 3c est largement ouverte de sorte qu'il communique avec le bac de récupération 9 qui s'étend sous ce logement creux 3c et même au-delà. Cette absence de fond au logement 3c permet de récupérer dans le bac 9 un éventuel débordement du récipient 12. La partie supérieure du logement 3c est également ouverte, de sorte que la zone de nettoyage 25 définie par ce logement s'étend au-dessus du récipient de rinçage 12.

Le récipient 12 présente à la base de sa face frontale 21e une languette 26 qui vient en appui sur le plateau repose-tasses 8 situé à la base du logement 3c. Cette languette 26 et la portion arrière 21c de la paroi du récipient venant en appui contre le fond du logement, permettent de retenir le récipient 12.

Le récipient 12 est avantageusement monté de manière amovible dans le logement 3c, par exemple pour nettoyer les quelques dépôts qui peuvent s'accumuler dans celui-ci. A cet effet, la base de la paroi arrière 21d présente un crochet 27 qui, en position montée, passe par une échancrure inférieure du logement 3c et vient derrière le fond du logement 3c. La languette 26 constitue alors un organe de préhension qui permet de dégager le récipient 12 du logement 3c. Pour cela, on soulève légèrement l'organe de préhension 26 en faisant basculer la paroi arrière 21d du récipient de sorte que le crochet 27 soit dégagé de la paroi du logement 3c, la buse vapeur 7 étant bien entendu relevée.

Le dispositif de déplacement 13 visible dans son ensemble à la figure 2 est porté par un axe vertical 30. Cet axe 30 est immobilisé par rapport au boîtier 2 à l'aide d'une console non représentée sur les figures. Un moteur d'entraînement en pivotement 31 présentant une roue dentée, est également monté de manière fixe par rapport au boîtier 2 à l'aide de cette console.

Un ensemble pivotant 32 est monté en rotation autour de l'axe 30 et comporte un secteur denté 33 qui engrène avec la roue dentée du moteur d'entraînement en pivotement 31. L'ensemble pivotant 32 présente également un bras inférieur 34 à l'extrémité duquel est agencé un organe de guidage 35 qui guide le coulissement vertical de la buse 7 par rapport à ce bras 34 qui ne se déplace pas verticalement. La distance entre l'axe 30 et l'organe de guidage 35, de l'ordre d'une dizaine de centimètres, constitue un bras de levier qui permet de déplacer horizontalement la buse 7 sur quelques centimètres avec un mouvement d'amplitude angulaire relativement limité. L'ensemble pivotant 32 forme donc un organe de déplacement horizontal de la buse.

L'ensemble 32 porte de plus un moteur d'entraînement vertical 37 présentant une roue dentée située au niveau de guides verticaux 38. Les guides verticaux 38 portent un chariot 39 qui présente une crémaillère et à partir duquel s'étend horizontalement un bras supérieur 40.

L'extrémité supérieure de la buse 7 est fixée au bras supérieur 40. L'eau ou la vapeur sont amenées dans la buse 7 par cette extrémité supérieure grâce à un conduit interne au bras 40 auquel est connectée une conduite flexible 42 reliée au dispositif d'alimentation en vapeur et eau chaude.

L'actionnement du moteur d'entraînement vertical 37 permet de déplacer l'extrémité du bras 40 d'une position haute, telle que représentée à la figure 2, vers une position basse, telle que celle représentée à la figure 5, et une position plus abaissée encore pour laquelle l'extrémité libre 7a de la buse vient en contact contre le fond 20 du récipient 12 pour des raisons explicitées ci-après.

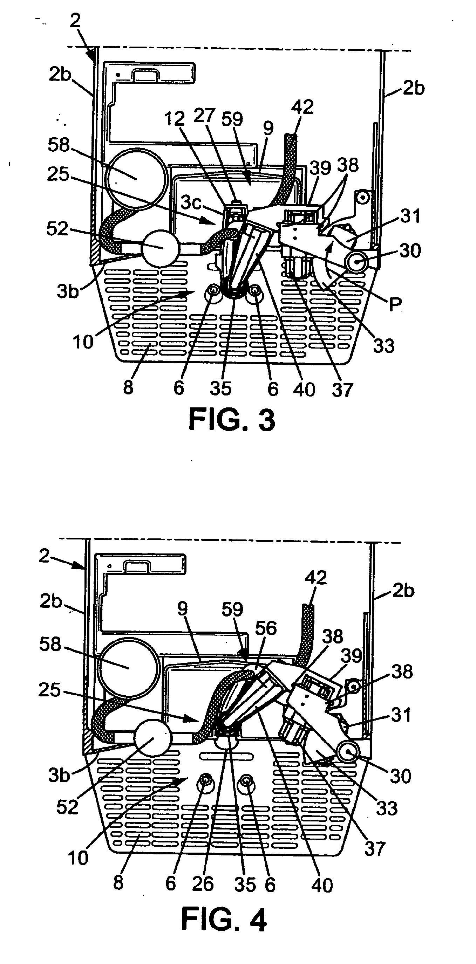

Le dispositif de déplacement 13 permet donc de déplacer verticalement la buse vapeur 7 dans la zone de préparation de boissons 10 pour que celle-ci plonge dans une tasse. Mais grâce au moteur d'entraînement en pivotement 31 et comme cela est mieux visible aux figures 3 et 4, la buse 7 peut être déplacée dans le plan horizontal de la zone de préparation de boissons 10 à la zone de nettoyage 25 définie par le logement 3c. Une fois dans la zone de nettoyage 25, la buse est située en regard de l'ouverture 22 du récipient 12, et un déplacement vertical de celle-ci, tout à fait analogue à celui effectué dans la zone de nettoyage, peut être commandé par l'unité de commande électronique. Néanmoins, il est possible de prévoir pour des raisons de coût que certains de ces déplacements, et notamment le déplacement horizontal, soient effectués manuellement.

Le dispositif de délivrance de produit de nettoyage 15 comprend un réservoir 50, une première conduite flexible 51 conduisant jusqu'à un dispositif de dosage 52, suivi d'une deuxième conduite flexible 54 emmanchée sur la première extrémité d'un tube 56, la deuxième extrémité de ce tube 56 formant la sortie de produit de nettoyage. Le réservoir 50 est agencé en hauteur par rapport au reste du dispositif de distribution de liquide de nettoyage, de sorte qu'il alimente celui-ci par gravité. Le réservoir 50 est monté par l'intermédiaire d'une collerette sur la paroi supérieure 2a du boîtier. Un bouchon 58 permet de remplir le réservoir 50 sans avoir à le sortir du boîtier 2. Mais, bien entendu, il est parfaitement possible de prévoir un réservoir interne amovible ou encore des réserves de produit de nettoyage se présentant sous forme de cartouches échangeables.

Le produit de nettoyage est de préférence un produit détergent concentré, adapté notamment pour dissoudre des traces de lait. Il peut contenir aussi des agents antimicrobiens.

Le dispositif de dosage 52 alimenté par gravité est une simple électrovanne commandée par l'unité de commande électronique. Il pourrait s'agir aussi d'une pompe doseuse particulièrement simple dont le volume unitaire correspond à une dose de produit, car comme cela apparaîtra par la suite, le système de nettoyage nécessite simplement la délivrance d'une dose déterminée et ce à une pression correspondant à la pression atmosphérique. Contrairement à d'autres dispositifs, il n'est donc pas nécessaire de délivrer sous pression un débit relativement régulier qui doit être mélangé avec un écoulement de fluide sous pression.

Le tube 56 traverse le bras inférieur 34 pour déboucher verticalement vers le bas. On notera que la sortie de produit de nettoyage 56 est donc rigidement liée au bras inférieur 34, et plus généralement à l'ensemble pivotant 32 qui permet de déplacer horizontalement la buse 7. Le tube 56 est judicieusement agencé pour que son débouché inférieur soit situé au-dessus de l'ouverture supérieure 22 du récipient de rinçage 12 lorsque la buse 7 est dans la zone de préparation 10, comme on peut le voir à la figure 3. Lorsque le dispositif de déplacement 13 place la buse 7 dans la zone de nettoyage 25, c'est-à-dire lorsqu'il atteint la configuration représentée à la figure 4, la sortie de liquide de nettoyage constituée par le tube 56, est déplacée vers l'arrière dans une position de rangement. Dans cette position, la sortie de liquide est dans une zone de rangement 59 et est située à l'intérieur de la machine, derrière la façade 3 et en dehors des zones de préparation et de nettoyage (10, 25), il n'y a donc aucun risque qu'un reliquat de produit de nettoyage tombe dans une tasse ou dans le récipient de rinçage 12.

Comme on peut le voir à la figure 4, la sortie de produit de nettoyage 56 placée dans cette zone de rangement 59 demeure au-dessus du bac de récupération 9 étant donné que celui-ci se prolonge vers l'arrière au-delà du logement 3c de la façade 3. D'éventuelles gouttes de produit de nettoyage sont alors récupérées par le bac 9.

Dans le mode de réalisation représenté, le bac de récupération 9 est formé en une seule pièce et présente un seul compartiment pour recueillir les éventuelles chutes de liquide passant à travers le plateau repose-tasses 8, l'ouverture inférieure du logement 3c, ou venant de la sortie de produit de nettoyage 56 en position de rangement. Mais il est envisageable de prévoir plusieurs bacs de récupération pour remplir ces différentes fonctions, ou encore de prévoir deux ou trois compartiments reliés par des trop-pleins pour les différentes zones. Toutefois, la réalisation en une seule pièce du bac 9 et son montage dans la machine par coulissement horizontal, comme cela apparaît à la figure 6, rend son utilisation plus pratique.

On va maintenant décrire différentes séquences de fonctionnement de la machine 1 décrite ci-dessus.

Pour la préparation d'une boisson, commandée automatiquement par l'une des touches du panneau de commande 4, la buse vapeur 7 est initialement placée dans la zone de préparation 10 en position relevée, c'est-à-dire telle que représentée à la figure 1. Si la séquence de préparation commandée comporte une étape d'introduction de vapeur dans la boisson, ou s'il s'agit d'une séquence faisant intervenir uniquement la buse vapeur 7 par exemple pour réchauffer une boisson, le dispositif de déplacement 13 commandé par l'unité de commande électronique entraîne un abaissement de l'extrémité libre 7a de la buse jusqu'à ce qu'elle soit plongée dans la boisson, mais de préférence sans toucher le fond de la tasse.

A la fin d'une telle séquence de préparation dans laquelle la buse 7 est entrée en contact avec la boisson, l'unité de commande est adaptée pour réaliser, soit une simple séquence de rinçage de la buse, soit une séquence de nettoyage de celle-ci. Mais on notera que les principaux avantages du système de nettoyage décrit sont obtenus même si la séquence de nettoyage et/ou de rinçage n'est pas initiée automatiquement après la préparation d'une boisson, mais initiée en appuyant sur des touches rinçage ou nettoyage, et même si la buse vapeur 7 doit être repoussée manuellement dans la zone de nettoyage 25 avant ou au cours de ces séquences.

Pour une séquence de rinçage automatisée après la préparation d'une boisson, l'unité de commande provoque le déplacement de la buse en position haute de la zone de préparation 10 à la zone de nettoyage 25 grâce au moteur d'entraînement en pivotement 31 qui entraîne l'ensemble de l'organe de déplacement horizontal 32 en pivotement selon la flèche P de la figure 3. L'extrémité libre 7a de la buse vapeur est située au-dessus du récipient de rinçage, et son abaissement dans celui-ci est effectué à l'aide du moteur d'entraînement vertical 37 qui abaisse l'organe de déplacement vertical 39 et le bras supérieur 40 auquel est fixée la buse 7.

Le remplissage du récipient de rinçage 12 est alors effectué par la buse 7 en commandant la délivrance d'eau chaude par celle-ci. L'unité de gestion est adaptée pour que la quantité d'eau chaude délivrée, qui constitue le liquide de rinçage, ne dépasse pas un niveau prédéterminé de liquide qui doit être situé sous le niveau maximum HLmax. Il est à noter que le remplissage du réservoir pourrait intervenir avec la buse vapeur en position haute, mais au risque de voir des projections d'eau chaude aller en dehors du récipient de rinçage 12.

La buse 7 est alors immergée dans le liquide de rinçage, ce qui améliore déjà la propreté de celle-ci étant donné que la boisson présente sur sa surface extérieure vient d'être préparée, et qu'une simple dilution de cette boisson par l'eau chaude permet d'en éliminer la plus grande quantité. Il est toutefois avantageux de procéder à une agitation du liquide autour de la buse.

L'agitation peut consister à entraîner un déplacement de bas en haut de celle-ci, de sorte que son extrémité libre 7a se déplace entre cette position abaissée, ou une position plus basse mais en évitant de préférence de toucher le fond 20 du récipient 12, et une position plus élevée mais sans nécessairement atteindre la position haute extrême dans laquelle la buse a été amenée dans la zone de nettoyage 25. La commande de trois mouvements de va-et-vient verticaux de la buse dans le récipient s'avère suffisant pour optimiser le rinçage de la buse.

L'agitation peut également être créée en délivrant de la vapeur par l'extrémité libre 7a de la buse immergée dans le liquide de rinçage. Le liquide de rinçage subit alors des remous relativement violents qui, avec la vapeur, nettoient la surface extérieure de la buse 7. Ces deux possibilités d'agitation peuvent être combinées successivement ou simultanément.

L'extrémité libre 7a de la buse est ensuite remontée au-dessus du niveau prédéterminé de liquide, et de préférence au-dessus du niveau maximum de liquide HLmax pour que le liquide de rinçage présent à la surface et surtout dans la buse s'égoutte. L'émission d'une brève impulsion de vapeur peut être commandée pour s'assurer de la vidange de la buse.

Après le décompte d'une temporisation prédéterminée correspondant à l'égouttage de la buse, la vidange du récipient de rinçage 12 est commandée de manière particulièrement simple avec le dispositif de vidange 23 précédemment décrit. En effet, il suffit de cette position d'égouttage de compléter le niveau de liquide du récipient 12 jusqu'au niveau maximum HLmax avec un débit suffisant pour remplir le coude 24b du conduit 24 et amorcer le siphon. Une fois le siphon amorcé, le liquide de rinçage souillé est évacué jusqu'au niveau de l'entrée 24a, c'est-à-dire que le réservoir est plus ou moins complètement vidé selon la position de l'entrée. Bien entendu, la vidange du récipient 12 pourrait être déclenchée avec l'extrémité libre 7a de la buse immergée dans le liquide, surtout si l'étape d'égouttage n'est pas prévue.

Il est à noter que d'autres dispositifs de vidange peuvent être adoptés avec le dispositif de déplacement 13 et le réservoir 12 agencés comme décrit ci-dessus. En effet, il est par exemple possible de prévoir une soupape sur le fond 20 du réservoir 12 et de commander l'ouverture de celle-ci en abaissant l'extrémité libre 7a de la buse pour venir en contact avec cette soupape.

Si la buse 7 n'est pas en position haute après la vidange du réservoir, la remontée de celle-ci est commandée afin qu'elle puisse être repositionnée dans la zone de préparation 10 par pivotement et sans heurter le réservoir 12. Néanmoins, avant de repositionner la buse 7, la séquence de rinçage peut être répétée une ou deux fois pour améliorer le rinçage. Deux séquences de rinçage successives réalisées immédiatement après une séquence de préparation de boissons permettent d'obtenir un résultat satisfaisant tout en limitant la quantité d'eau utilisée, et par conséquent en optimisant l'autonomie de la machine, tant au niveau de son réservoir d'eau qu'au niveau du remplissage du bac de récupération 9.

Si cela s'avère nécessaire, la séquence de rinçage peut être remplacée par une véritable séquence de nettoyage, suivie d'une ou plusieurs séquences de rinçage, et de préférence de trois séquences de rinçage pour s'assurer qu'aucune trace de produit nettoyant ne demeure sur la buse.

La séquence de nettoyage débute par la délivrance de produit de nettoyage, avant même que la buse 7 soit déplacée de la zone de préparation 10 à la zone de nettoyage 25. En effet, pour délivrer un produit de nettoyage dans le récipient de rinçage 12, il faut que la sortie de produit 56 soit située au-dessus de l'ouverture 22 du récipient, et par conséquent que le bras inférieur 34 soit dans une position angulaire correspondant à la figure 3. Le dosage du produit de nettoyage est effectué en laissant ouvert pour un temps donné l'électrovanne 52, ce qui permet un dosage relativement précis étant donné le faible débit obtenu par l'écoulement par gravité depuis le réservoir 50.

Une fois la dose de produit de nettoyage délivrée, et éventuellement après une temporisation, l'ensemble pivotant 32 est déplacé par le moteur d'entraînement en pivotement 31 pour placer la buse au-dessus du récipient de rinçage 12 comme représenté à la figure 4, c'est-à-dire comme pour initier une séquence de rinçage et avant le rinçage proprement dit. Il est à noter que dans cette configuration la sortie de produit 56 est en position de rangement au-dessus du bac de récupération 9. Par conséquent, si un reliquat de produit de nettoyage s'égoutte, ceci n'a aucune conséquence.

A partir de cette position, la séquence de nettoyage se poursuit selon exactement les mêmes étapes que celles de la séquence de rinçage, mis à part que le liquide de rinçage constitué par l'eau chaude est cette fois-ci mélangé au produit de nettoyage pour constituer une solution nettoyante qui agit sur les salissures de la buse.

A la fin de la séquence de nettoyage, c'est-à-dire après évacuation de la solution nettoyante, on procède systématiquement à au moins une séquence de rinçage afin que des traces de produit de nettoyage ne viennent pas altérer le goût ou l'aspect d'une boisson préparée par la suite. Pour avoir un haut degré de fiabilité sur l'absence de telles traces, on procède à trois séquences de rinçage après une séquence de nettoyage.

Cette séquence de nettoyage peut bien entendu être commandée à l'initiative de l'utilisateur, mais pour une utilisation plus automatisée et donc la plus simple possible pour l'utilisateur, tout en optimisant la consommation d'eau et l'autonomie de la machine en produit de nettoyage, la séquence de nettoyage n'est déclenchée que dans certaines conditions. Ces conditions peuvent comprendre un nombre de cycles de préparation de boissons effectuées depuis la dernière séquence de nettoyage. Par exemple, l'unité de commande électronique peut comptabiliser les cycles de préparation pour prévoir une séquence de nettoyage après dix cycles de préparation de boissons faisant intervenir la buse vapeur 7. Le déclenchement de la séquence de nettoyage peut aussi être commandé en comptabilisant un temps écoulé depuis la dernière séquence de nettoyage, par exemple en la déclenchant automatiquement si 24 heures ou 7 jours se sont écoulés depuis la dernière séquence de nettoyage. Ces deux types de condition peuvent être avantageusement combinés pour obtenir le meilleur compromis possible entre la propreté de la buse et les consommations d'eau et de produit de nettoyage, son déclenchement étant commandé dès que l'une des deux conditions est atteinte.

Il apparaît que la plage de déplacement vertical de l'extrémité libre 7a de la buse doit être contrôlée de manière assez précise, notamment pour réaliser une étape d'agitation de la buse qui soit d'amplitude relativement importante mais sans heurter le fond 20 du récipient 12.

Pour cela, une séquence de calibrage du dispositif de déplacement 13 dans la direction verticale est effectuée de la manière suivante : la buse vapeur 7 est abaissée dans la zone de nettoyage 25 jusqu'à ce que l'extrémité libre 7a de celle-ci vienne en butée contre le fond 20 du récipient de rinçage 12. Cette position de butée est identifiée et mémorisée par l'unité de commande électronique grâce à une analyse du courant utilisé par le moteur d'entraînement vertical 37. De manière connue en soi, un pic de l'intensité consommée par ce moteur indique que l'on a atteint la position de butée. En mémorisant la position d'abaissement maximal, sous forme d'une durée d'alimentation du moteur depuis la position haute, ou sous forme d'un nombre de tours effectués, il est possible d'éviter de toucher à nouveau le fond du récipient, mais surtout d'éviter de toucher le fond d'une tasse. Ce dernier point est plus important étant donné que certaines tasses peuvent s'avérer relativement fragiles et que la délivrance de vapeur dans une tasse avec la buse 7 en butée contre le fond peut créer des éclaboussures. Tandis que le récipient de rinçage 12, prévu pour cette machine et un usage bien spécifique, peut tout à fait être dimensionné afin que le fond de celui-ci 20 résiste parfaitement à une telle séquence de calibration.

Bien entendu, l'exemple de réalisation décrit ci-dessus n'est nullement limitatif. On aura compris que tous les aspects décrits ne sont pas nécessairement repris pour réaliser un nettoyage simplifié d'une buse vapeur, il est notamment possible de prévoir que le déplacement horizontal de la zone de préparation 10 à la zone de nettoyage 24, est non seulement commandé manuellement, mais effectué manuellement en repoussant la buse pour économiser un actionneur électrique. D'autre part, il apparaîtra aussi clairement que la buse 7 n'est pas impérativement une buse vapeur au sens où on l'entend pour une machine à café espresso, mais qu'il peut s'agir d'une buse délivrant en plus du lait, voire une boisson toute prête.

## Revendications

1. Machine pour la préparation de boissons comprenant :
- un boîtier (2) présentant une façade (3) ;
- une zone de préparation de boissons (10) délimitée sur un côté par la façade, dans sa partie supérieure par au moins une sortie de boisson (6), et dans sa partie inférieure par un plateau repose-tasses (8) sur lequel est susceptible d'être placée une tasse recueillant la boisson ; et
- une buse vapeur mobile (7) reliée au boîtier par un dispositif de déplacement (13) et présentant une extrémité libre (7a),
**caractérisée en ce que** le boîtier (2) comprend en outre un logement (3c) définissant une zone de nettoyage (25), dans laquelle est agencé un récipient de rinçage (12) présentant une ouverture supérieure (22) et comportant un dispositif de vidange (23) du liquide susceptible d'être contenu dans celui-ci, et dans laquelle la buse mobile (7) déplacée depuis la zone de préparation, est entraînée selon un mouvement vertical par le dispositif de déplacement (13) de sorte que l'extrémité libre (7a) de ladite buse pénètre dans le récipient (12) par son ouverture supérieure (22).

2. Machine selon la revendication 1, dans laquelle le logement (3c) définissant la zone de nettoyage (25) est un logement en creux formé dans la façade (3) du boîtier, de préférence en regard de la zone de préparation (10), le récipient de rinçage (12) étant intégralement contenu dans ledit logement.

3. Machine selon la revendication 1 ou 2, dans laquelle la buse (7) présente à partir de son extrémité libre une portion rectiligne allongée (7b), et dans laquelle le récipient de rinçage (12) présente une forme allongée verticalement définie par une paroi annulaire (21) s'étendant depuis un fond (20) jusqu'à l'ouverture supérieure (22), ladite paroi annulaire étant configurée pour entourer étroitement la portion rectiligne (7b) de la buse plongée dans le récipient.

4. Machine selon l'une quelconque des revendications précédentes, dans laquelle le récipient de rinçage (12) est monté de manière amovible dans le logement du boîtier(2).

5. Machine selon la revendication 4, dans laquelle le logement en creux (3c) du boîtier présente une ouverture frontale s'étendant jusqu'au plateau repose-tasses (8), et dans laquelle le récipient de rinçage (12) présente un organe de préhension (26) faisant saillie de l'ouverture frontale du logement et venant de préférence en appui sur le plateau repose-tasses (8).

6. Machine selon l'une quelconque des revendications précédentes, dans laquelle le récipient de rinçage (12) comporte un dispositif de vidange (23) apte à évacuer le liquide contenu dans ledit récipient vers un bac de récupération (9) placé sous celui-ci et amovible par rapport au boîtier (2).

7. Machine selon la revendication 6, dans lequel le bac de récupération (9) s'étend également sous le plateau repose-tasses (8) qui est perforé, ledit bac de récupération étant amovible par coulissement horizontal par rapport au boîtier (2).

8. Machine selon l'une quelconque des revendications précédentes, dans laquelle le dispositif de vidange (23) est une conduite (24) formant un siphon qui présente une entrée (24a) située à l'intérieur du récipient et à proximité du fond (20) de celui-ci, un coude (24b) situé à proximité de l'ouverture supérieure (22) du récipient et à un niveau (HLmax) correspondant à un maximum de liquide contenu dans le récipient, et une sortie (24c) située sous le niveau de l'entrée et de préférence orientée vers le bas.

9. Machine selon l'une quelconque des revendications précédentes, dans laquelle le récipient de rinçage (12) comporte un trop-plein (21b), et dans laquelle le logement (3c) de la zone de nettoyage (25) présente une ouverture inférieure communiquant avec un bac de récupération (9).

10. Machine selon l'une quelconque des revendications précédentes, dans laquelle le récipient de rinçage (12) présente une face frontale transparente (21e) qui est visible au niveau de la façade (3) du boîtier.

## Claims

1. A drink preparing machine including:
- a body (2) having a facade (3);
- a drink preparing area (10) bordered by the facade on one side, by at least one drink outlet (6) on the top, and on the bottom by a cup tray (8) on which a cup collecting the drink can be placed; and
- a moveable steam nozzle (7) connected to the body by a movement device (13) and having a free end (7a),
**characterized in that** the body (2) further includes a housing (3c) defining a cleaning area (25), wherein a rinsing container (12) is disposed having a top opening (22) and including a draining device (23) for draining liquid that can be contained therein, and wherein the moveable nozzle (7) movable from the preparing area, is driven in a vertical movement by the movement device (13) such that the free end (7a) of said nozzle penetrates the container (12) through the top opening thereof (22).

2. A machine according to claim 1, in which the housing (3c) defining the cleaning area (25) is a recessed housing formed in the facade (3) of the body, preferably facing the preparing area (10), the rinsing container (12) being entirely contained in said housing.

3. A machine according to claim 1 or 2, wherein the nozzle (7), from the free end thereof, has an elongated rectilinear portion (7b), and wherein the rinsing container (12) has a vertically elongated shape defined by an annular wall (21) extending from a bottom (20) to the top opening (22), said annular wall being configured so as to closely surround the rectilinear portion (7b) of the nozzle immersed into the container.

4. A machine according to any one of the preceding claims, wherein the rinsing container (12) is removably mounted in the housing of the body (2).

5. A machine according to claim 4, wherein the recessed housing (3c) of the body has a front opening extending to the cup tray (8), and wherein the rinsing container (12) has a gripping member (26) projecting from the front opening of the housing and preferably supported on the cup tray (8).

6. A machine according to any one of the preceding claims, wherein the rinsing container (12) includes a draining device (23) capable of evacuating the liquid contained in said container to a collecting tray (9) that is placed underneath the container and is removable from the body (2).

7. A machine according to claim 6, wherein the collecting tray (9) also extends underneath the cup tray (8) which is perforated, said collecting tray being removable by sliding horizontally relative to the body (2).

8. A machine according to any one of the preceding claims, wherein the draining device (23) is a conduit (24) forming a siphon that has an inlet (24a) located inside the container in proximity to the bottom (20) of the container, a bend (24b) located in proximity to the top opening (22) of the container and at a level (HLmax) corresponding to a maximum amount of liquid contained in the container, and an outlet (24c) located below the level of the inlet and preferably orientated downward.

9. A machine according to any one of the preceding claims, wherein the rinsing container (12) includes an overflow outlet (21 b), and wherein the housing (3c) of the cleaning area (25) has a bottom opening that communicates with a collecting tray (9).

10. A machine according to any one of the preceding claims, wherein the rinsing container (12) has a transparent front face (21 e) that is visible at the level of the facade (3) of the body.

## Patentansprüche

1. Maschine für die Zubereitung von Getränken, umfassend:
- ein Gehäuse (2), das eine Vorderseite (3) aufweist;
- einen Getränkezubereitungsbereich (10), der auf einer Seite von der Vorderseite, in seinem oberen Teil von wenigstens einem Getränkeaustritt (6) und in seinem unteren Teil von einem Tassenabstelltablett (8) begrenzt ist, auf dem eine Tasse zur Aufnahme des Getränks angeordnet werden soll; und
- eine bewegliche Dampfdüse (7), die mit dem Gehäuse über eine Verschiebungsvorrichtung (13) verbunden ist und ein freies Ende (7a) aufweist;
**dadurch gekennzeichnet, dass** das Gehäuse (2) ferner eine Aufnahme (3c) umfasst, die einen Reinigungsbereich (25) definiert, in dem ein Spülgefäß (12) angeordnet ist, das eine obere Öffnung (22) aufweist und eine Ableervorrichtung (23) für die Flüssigkeit umfasst, die in diesem enthalten sein kann, und in den die bewegliche Düse (7), die vom Zubereitungsbereich aus verschoben wird, gemäß einer vertikalen Bewegung durch die Verschiebungsvorrichtung (13) geführt wird, so dass das freie Ende (7a) der Düse in das Gefäß (12) durch dessen obere Öffnung (22) eindringt.

2. Maschine nach Anspruch 1, wobei die Aufnahme (3c), die den Reinigungsbereich (25) definiert, eine hohle Aufnahme ist, die in der Vorderseite (3) des Gehäuses ausgebildet ist, vorzugsweise gegenüber dem Zubereitungsbereich (10), wobei das Spülgefäß (12) zur Gänze in dieser Aufnahme enthalten ist.

3. Maschine nach Anspruch 1 oder 2, wobei die Düse (7) ausgehend von ihrem freien Ende einen geradlinigen, länglichen Abschnitt (7b) aufweist, und wobei das Spülgefäß (12) eine vertikal längliche Form aufweist, die von einer ringförmigen Wand (21) definiert wird, die sich ausgehend von einem Boden (20) bis zur oberen Öffnung (22) erstreckt, wobei die ringförmige Wand ausgeführt ist, um den geradlinigen Abschnitt (7b) der in das Gefäß eingetauchten Düse eng zu umschließen.

4. Maschine nach einem der vorhergehenden Ansprüche, wobei das Spülgefäß (12) abnehmbar in der Aufnahme des Gehäuses (2) befestigt ist.

5. Maschine nach Anspruch 4, wobei die hohle Aufnahme (3c) des Gehäuses eine Frontöffnung aufweist, die sich bis zum Tassenabstelltablett (8) erstreckt, und wobei das Spülgefäß (12) ein Greifelement (26) aufweist, das von der Frontöffnung der Aufnahme vorragt und sich vorzugsweise auf das Tassenabstelltablett (8) stützt.

6. Maschine nach einem der vorhergehenden Ansprüche, wobei das Spülgefäß (12) eine Ableervorrichtung (23) umfasst, die imstande ist, die im Gefäß enthaltene Flüssigkeit in einen Auffangbehälter (9) abzuleiten, der unter diesem und in Bezug auf das Gehäuse (2) abnehmbar angeordnet ist.

7. Maschine nach Anspruch 6, wobei sich der Auffangbehälter (9) ebenfalls unter dem Tassenabstelltablett (8) erstreckt, das perforiert ist, wobei der Auffangbehälter durch horizontales Schieben in Bezug auf das Gehäuse (2) abgenommen werden kann.

8. Maschine nach einem der vorhergehenden Ansprüche, wobei die Ableervorrichtung (23) ein Kanal (24) ist, der einen Siphon bildet, der einen Eintritt (24a), der sich innerhalb des Gefäßes und in der Nähe des Bodens (20) von diesem befindet, ein Kniestück (24b), das sich in der Nähe der oberen Öffnung (22) des Gefäßes und auf einer Höhe (HLmax) befindet, die einem Maximum der im Gefäß enthaltenen Flüssigkeit entspricht, und einen Austritt (24c) aufweist, der sich unter der Eintrittshöhe befindet und vorzugsweise nach unten gerichtet ist.

9. Maschine nach einem der vorhergehenden Ansprüche, wobei das Spülgefäß (12) einen Überlauf (21b) umfasst, und wobei die Aufnahme (3c) des Reiniungsbereichs (25) eine untere Öffnung aufweist, die mit einem Auffangbehälter (9) verbunden ist.

10. Maschine nach einem der vorhergehenden Ansprüche, wobei das Spülgefäß (12) eine transparente Frontseite (21 e) aufweist, die auf Höhe der Vorderseite (3) des Gehäuses sichtbar ist.
